# EUROPÄISCHE PATENTANMELDUNG

(11) **EP 2 498 299 A1**
(43) Veröffentlichungstag der Anmeldung: **12.09.2012**
(21) Anmeldenummer: 11157559.3
(22) Anmeldetag: 09.03.2011
(51) Int. Cl.: H01L 31/042

(54) **Photovoltaikanlage, Steuereinrichtung und Schaltvorrichtung**

(71) Anmelder: SIEMENS AKTIENGESELLSCHAFT, 80333 München (DE)
(72) Erfinder: Körber, Nils, 91056, Erlangen (DE)

(57) **Zusammenfassung**

In einer Photovoltaikanlage (1) mit mindestens einer Reihenschaltung von Solarzellen (2) weist gemäß der Erfindung mindestens eine Gruppe von Solarzellen (11,12,13,14,15) ein Schaltmittel (35) auf, das derart ausgelegt ist, dass eine vorgegebene oder vorgebbare An- oder Abschaltung der Gruppe erfolgen kann. Ferner muss zu jedem dieser Schaltmittel (35) mindestens ein Mittel zur Brückung (37) vorhanden sein, welches derart ausgelegt ist, dass während der Abschaltung der Gruppe eine Verbindung zwischen den in der Reihenschaltung verbleibenden Solarzellen bestehen bleibt. Auf diese Weise wird eine höhere Effizienz der Anlage erreicht, da nun innerhalb der Reihenschaltung nicht mehr die Gruppe, welche den geringsten Strom liefert, die Gesamtleistungsabgabe bestimmt. Es wird ferner eine Steuereinrichtung (40) und Schaltvorrichtung (30) angegeben.

## Beschreibung

Die Erfindung betrifft eine Photovoltaikanlage mit mindestens einer Reihenschaltung von Solarzellen. Die Erfindung betrifft weiterhin eine entsprechende Steuereinrichtung und Schaltvorrichtung.

Photovoltaik-Solaranlagen bestehen im Prinzip aus zusammen geschalteten Solarzellen sowie einem Stromwandler. Handelt es sich um eine netzgekoppelte Anlage, wird mit Hilfe eines Wechselrichters der in den Solarzellen entstehende Gleichstrom in Wechselstrom gewandelt und ins Stromnetz eingespeist. Bei der Netzeinspeisung in ein 230 V-Netz sind Stromwandler bzw. Wechselrichter üblicherweise im sog. Netzeinspeisegerät untergebracht. Für den effizienten Betrieb ist dabei eine Mindest-Eingangsspannung am Stromwandler notwendig, typisch sind hier Spannungen ab 125 V DC. (Trafolose Geräte mit höheren Eingangsspannungen ab 350 V erzielen i. a. höhere Wirkungsgrade als Geräte mit kleineren Eingangsspannungen und Transformatoren.) Um diese Mindesteingangsspannung zu erreichen, müssen viele Solarzellen in Reihe geschaltet werden. Der Strom durch diese Reihenschaltung wird durch diejenige Solarzelle begrenzt, welche die schwächste Stromabgabe hat. Deshalb sollen die beteiligten Solarzellen möglichst gleiche technische Daten/Eigenschaften haben und gleiche Sonneneinstrahlung bekommen. Die Zusammenschaltung der Solarzellen ist dabei üblicherweise derart realisiert, dass eine bestimmte Anzahl von Solarzellen zu einem Solarmodul zusammengefasst wird. Mehrere in Reihe geschaltete Solarzellen eines Moduls werden als Modulstrang oder Modulstring bezeichnet. Die Reihenschaltung mehrerer Solarmodule wird dann als Strang oder String bezeichnet. Häufig wird eine elektrische Einheit aus einer Gruppe von Solarmodulen auch als Solargenerator bezeichnet, Teileinheiten entsprechend als Teilgeneratoren.

Ein Problem bei Solaranlagen stellt die Effizienzminderung aufgrund von Verschattung dar, weil die genutzten Flächen, zumeist Dachflächen, nicht immer frei von Schatten sind. Hinzu kommt, dass der Schattenwurf, z. B. durch Schornsteine, Gauben oder Bäume, nicht konstant ist, sondern sich mit dem Sonnenstand verändert. Eine ausreichend stark verschattete Solarzelle wirkt dabei nicht mehr als Stromquelle, sondern als Widerstand.

Die Hersteller von Solaranlagen tragen dem Rechnung, indem sie die Solarzellen im Solarmodul in Gruppen zusammenfassen und im Widerstandsfall, also wenn Zellen aus der Gruppe ausreichend stark verschattet sind, den Strom mit einer sog. Bypass-Diode an der Gruppe vorbeileiten. Diese Vorkehrung dient allerdings mehr dem Schutz des Solarmoduls durch Vermeidung von punktuellen thermischen Belastungen ("Hot Spots"), als der Leistungsoptimierung.

Ist die Verschattung dagegen NICHT ausreichend stark, so wirkt eine Solarzelle trotz Verschattung immer noch als Stromquelle, allerdings bei reduzierter Stromabgabe. Wie das zugehörige Modul letztlich wirkt, hängt wesentlich davon ab, wie hoch die Rest-Lichtstärke am Modul ist und wie sie sich verteilt. Es ist anzunehmen, dass der Fall der reduzierten Stromabgabe bei den heutigen Hochleistungsmodulen häufiger auftritt als der Widerstandsfall, der eine sehr starke Verdunkelung voraussetzt.

Tritt der Fall der reduzierten Stromabgabe an einem Modul auf, hat das Auswirkungen auf die gesamte Photovoltaikanlage: Der Strom durch die Reihenschaltung der Solarmodule wird durch dasjenige Modul begrenzt, das die schwächste Stromabgabe hat. Dies bedeutet, dass bereits ein verschattetes Solarmodul den Gesamtstrom der Reihenschaltung aller Module negativ beeinflusst, und damit auch die Leistung der gesamten Solaranlage.

Eine Beispielrechnung soll diesen Fall erläutern:
Die Reihenschaltung von 10 Solarmodulen zu 36 V bei 5 A bringt eine Eingangsleistung von 10 * 36 V * 5 A = 1800 W am Netzeinspeisegerät. Wird der Strom eines Moduls durch Verschattung auf 2,5 A reduziert, verringert sich die Eingangsleistung der Gesamtanlage am Netzeinspeisegerät auf 10 * 36 V * 2,5 A = 900 W. Wird dieses eine Modul dagegen stark genug verschattet, so dass der Widerstandsfall eintritt (und damit der Strom mit den Bypass-Dioden um das Modul herumgeleitet wird), sinkt die Eingangsleistung am Netzeinspeisegerät nur auf ca. (9 * 36 V - 3 V) * 5 A = 1605 W. 3 V ist dabei die ungefähre Durchlassspannung, die an 3 Bypass-Dioden abfällt.

Dies zeigt deutlich, dass für den Fall der reduzierten Stromabgabe bereits die Verschattung von nur einem Modul die Leistungsabgabe der gesamten Photovoltaikanlage stark negativ beeinflussen kann. Gerade aus Effizienzgründen sollte aber eine Photovoltaikanlage derart aufgebaut sein, dass für jede Bestrahlungssituation eine optimale Energieausbeute erzielt wird.

Das beschriebene Problem wird in der Regel dadurch gelöst, dass die von Schatten betroffenen Aufbauplätze bei der Planung ausgelassen werden oder die Verluste durch die Begrenzung des gesamten erzeugten Stroms durch einzelne Module einfach hingenommen werden. Eine dritte Möglichkeit besteht darin, die garantiert unverschatteten Solarmodule in einem Strang zusammenzufassen, die vom Schatten betroffenen Solarmodule dagegen in einem zweiten, getrennten Strang. Hierzu werden dann mehrere Netzeinspeisegeräte oder ein Netzeinspeisegerät mit der sog. Multi-Strang-Technik eingesetzt. Allerdings muss bei der Auslegung der Stränge darauf geachtet werden, dass die Mindest-Eingangsspannung des Netzeinspeisegeräts stets erreicht wird. In der Praxis wird man deshalb auch bei Aufteilung der Anlage in mehrere Stränge die verschatteten Module mit einigen unverschatteten Modulen kombinieren müssen. Dadurch gerät man wieder in die oben beschriebene Situation eines teilverschatteten Stranges, wenn auch in kleinerem Umfang, aber dafür mit mehr technischem Aufwand.

Es ist daher die Aufgabe der vorliegenden Erfindung, eine Photovoltaikanlage anzugeben, die derart ausgelegt ist, dass eine Leistungsoptimierung erreicht wird, unter anderem wenn eine Teilverschattung vorliegt. Es ist ferner die Aufgabe der Erfindung, eine Steuereinrichtung und eine Schaltvorrichtung für eine Photovoltaikanlage anzugeben, mittels welcher eine Leistungsoptimierung der Anlage bewirkt werden kann.

Die erste Aufgabe wird durch die im kennzeichnenden Teil des Anspruchs 1 angegebenen Merkmale gelöst. Die weitere Aufgabe wird erfindungsgemäß durch eine Steuereinrichtung gemäß Anspruch 10 und eine Schaltvorrichtung gemäß Anspruch 11 gelöst.

In einer Photovoltaikanlage mit mindestens einem Strang oder einer Reihenschaltung von Solarzellen weist erfindungsgemäß mindestens eine Gruppe von Solarzellen ein Schaltmittel auf, das derart ausgelegt ist, dass eine vorgegebene oder vorgebbare An- oder Abschaltung der Gruppe erfolgen kann. Ferner ist zu jedem dieser Schaltmittel mindestens ein Mittel zur Brückung vorhanden, welches derart ausgelegt ist, dass während der Abschaltung der Gruppe eine Verbindung zwischen den in der Reihenschaltung verbleibenden Solarzellen besteht.

Mit anderen Worten bedeutet dies, dass die Begrenzung des Gesamtstroms eines Stranges durch eine verschattete Solarzellengruppe, z. B. ein Solarmodul, dadurch überwunden wird, dass die betroffene Gruppe abgeschaltet und damit aus dem Strang genommen wird, während der Reststrang betriebsbereit bleibt. Dadurch kann der reduzierte Strom der verschatteten Solarzellengruppe den Gesamtstrom im Strang nicht mehr beeinflussen. Die Zellen der anderen, nichtverschatteten Gruppen bzw. Module hingegen können weiterhin den vollen möglichen Beitrag zum Gesamtstrom liefern, so dass eine höhere Effizienz der Anlage erreicht wird, da nun nicht mehr das schwächste Glied die Gesamtleistungsabgabe bestimmt.

Der wesentliche Vorteil der gezeigten Lösung ist damit die Nutzung des vollen Stroms, den die nichtverschatteten Gruppen bzw. Module im Strang liefern. Trotz der durch die Abschaltung verringerten Gesamtspannung des Strangs ist dabei die erzeugte Gesamtleistung mindestens so hoch wie im Widerstandsfall und regelmäßig wesentlich höher, als im Falle der Strom-Reduzierung. Es liegt also eine Leistungsoptimierung vor.

In einer ersten Ausführungsvariante der Erfindung ist das Schaltmittel, mit welchem eine Abschaltung einer Gruppe von Solarzellen aus einem Strang erreicht wird, steuerbar ausgelegt. Durch eine Steuerung des Schaltmittels kann nun die Abschaltung vorteilhaft **definiert** erfolgen. Damit wird erreicht, dass sich die Photovoltaikanlage als Ganzes deterministisch verhält. Das Anlagenverhalten wird vorhersagbar und einstellbar (unabhängig vom Fall der Verschattung). Eine einfache Betrachtung einiger Betriebsfälle zeigt die zahlreichen Vorteile dieser erfindungsgemäßen Lösung:
Eine steuerbare Abschaltung einzelner Solarzellengruppen oder Module führt zu
   ● erhöhter Sicherheit bei der Anlagenauslegung: Die Mindest ― und Höchstspannung eines Stranges können leichter eingehalten werden.
   ● mehr Sicherheit bei der Ertragsplanung: Der voraussichtliche Ertrag kann anhand der bekannten Standortdaten und einer einfachen Schattenzeit-Analyse ermittelt werden.
   ● zusätzlicher Sicherheit im Betrieb: Die zusätzliche Erwärmung der verschatteten Module durch Strom aus den anderen Modulen des Stranges ("Hot Spot") wird zuverlässig verhindert.

Vorteilhaft ist das steuerbare Schaltmittel als mechanischer, elektromagnetischer oder elektronisch betätigter Schalter ausgelegt. Dies bedeutet, dass eine Abschaltung, die den Strang betriebsbereit erhält, näherungsweise schon mit einem geeigneten handelsüblichen Bauelement wie z. B. einem Kippschalter, einem Relais, einem Schütz oder Halbleiterbauelement oder einer Kombination aus allen Varianten möglich ist.

Um bei Abschaltung eine unterbrechungsfreie Verbindung zwischen den in der Reihenschaltung verbleibenden Solarzellen zu gewährleisten, wird vorteilhaft als Mittel zur Brückung ein Halbleiter-Bauelement wie beispielsweise eine Diode oder ein Thyristor verwendet. Auch hier zeigt sich die Einfachheit der erfindungsgemäßen Lösung.

Weitere vorteilhafte Ausgestaltungen der Erfindung betreffen Steuervarianten zur Erreichung der definierten Abschaltung einzelner Solarzellengruppen oder -module. Zum Einen kann eine zentrale Steuerung für mindestens eine Gruppe von Solarzellen und deren Schaltmittel vorgesehen sein. Zum Anderen kann eine dezentrale Steuerung pro Solarzellengruppe und Schaltmittel vorgesehen sein. Dass die Erfindung beide Steuervarianten abdeckt, führt zu maximaler Flexibilität bei der Anwendung.

Als besonders vorteilhaft ist die Kombination einer Steuerung mit einer Sensorik anzusehen. Hierüber lassen sich für alle Anwendungsmöglichkeiten optimale Bedingungen erzielen. Insbesondere Sensoren zur Bestimmung der Helligkeit bieten sich hierbei an, um zu bestimmen, zu welchem Zeitpunkt ein Modul oder eine Zellengruppe an- oder abgeschaltet werden soll.

Eine zeitliche Steuerung beispielsweise mittels einer Zeitschaltuhr oder anderen programmierbaren Steuergeräten kann in machen Fällen eine Sensorik ersetzen oder auch mit einer solchen kombiniert werden, je nachdem, wie eine Leistungsoptimierung gewünscht ist.

In einer weiteren Ausführungsvariante sind die Schaltmittel vorteilhaft mit einer Steuerung verbunden, welche die elektrischen Betriebswerte von Solarzellen in verschiedenen Teilen der Reihenschaltung auswertet und in Abhängigkeit der Auswerteergebnisse in Hinblick auf eine Leistungsoptimierung die Schaltmittel steuert. Dadurch wird die Ansteuerung der Schaltmittel erleichtert und die Leistungsoptimierung vereinfacht, da nun eine "Verselbständigung" des Gesamtsystems entsteht.

Ferner besteht die Möglichkeit, die Schaltmittel über einen Bus mit einer Steuerung zu verbinden.

Die Erfindung wird nachfolgend anhand von in den Zeichnungen dargestellten Ausführungsbeispielen näher erläutert.

Es zeigen:
- FIG 1: einen prinzipiellen Aufbau einer Photovoltaikanlage für die Netzeinspeisung (Stand der Technik),
- FIG 2: eine Skizze zur Verdeutlichung der definierten Abschaltung eines Solarmoduls,
- Fig. 3: ein Ausführungsbeispiel einer Vorrichtung zur definierten Abschaltung eines Solarmoduls,
- Fig. 4: ein Ausführungsbeispiel einer Vorrichtung zur definierten Abschaltung von zwei Solarmodulen,
- Fig. 5: Gegenüberstellung von Messreihen der abgegebenen Leistung von zwei Strängen für die Fälle: ein Teil der Solarmodule verschattet, alle Solarmodule unverschattet, ein Teil der Solarmodule abgeschaltet.

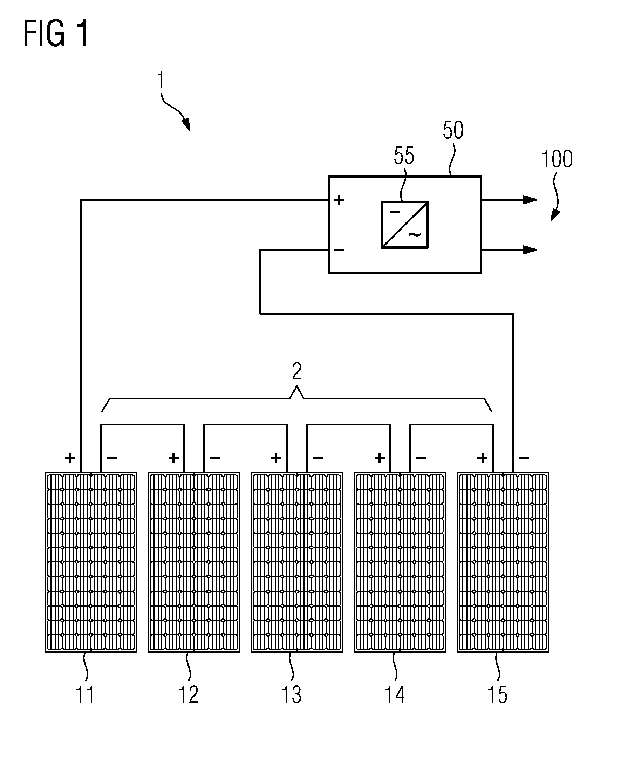

Figur 1 zeigt in einer Skizze den prinzipiellen Aufbau einer Photovoltaikanlage mit Netzeinspeisung. Eine mit 1 bezeichnete Photovoltaikanlage umfasst eine Reihenschaltung 2 aus fünf Solarmodulen 11, 12, 13, 14 und 15 zur Generierung elektrischer Energie aus der Sonnenenergie. Die Reihenschaltung mehrerer Solarmodule wird üblicherweise als Strang oder String bezeichnet. Jedes Solarmodul selbst weist ebenfalls eine Reihenschaltung aus einer Vielzahl von gleich ausgerichteten Solarzellen auf, welche manchmal als Modulstrang bezeichnet wird. Die interne Verschaltung der einzelnen Solarmodule ist nicht dargestellt. Die Solarmodule 15 und 11 sind jeweils mit einem Netzeinspeisegerät 50 verbunden, welches als Stromwandler einen Wechselrichter 55 enthält, in welchem der in den Solarmodulen generierte Gleichstrom in Wechselstrom umgewandelt wird und ins Stromnetz 100 eingespeist wird.

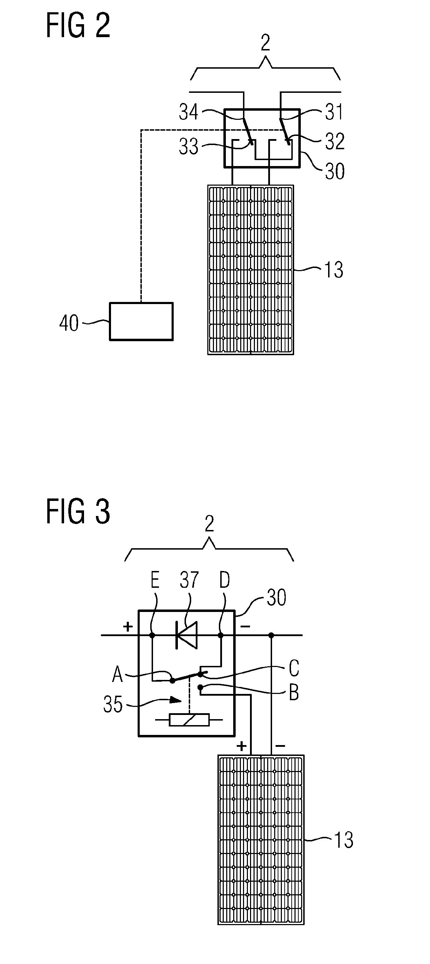

In Figur 2 zeigt eine Skizze zur Verdeutlichung der erfindungsgemäßen definierten Abschaltung eines Solarmoduls. Durch eine einfache Schaltvorrichtung 30 wird das Solarmodul 13 aus dem Strang 2 genommen und somit abgeschaltet. Der Reststrang bleibt betriebsbereit. Innerhalb der Schaltvorrichtung 30 sind zwei Schalter angedeutet. Der Strom wird über die Kontakte 31, 32 33 und 34 an dem Modul 13 "vorbeigeleitet". Die beiden Schalter werden von einer Steuerung 40 angesteuert, wodurch eine vorgegebene oder vorgebbare An- oder Abschaltung des Solarmoduls erfolgen kann.

In der unterbrechungsfrei arbeitenden Ausführung der Schaltvorrichtung 30 sind wesentliche Elemente:
Ein Schaltmittel (nicht brückend), z. B. ein elektromagnetisch betätigter Umschalter, und ein Halbleiterbauelement zur unterbrechungsfreien Brückung.
Das Schaltmittel kann dabei wie folgt ausgeführt sein als
   ● Mechanisch direkt betätigter Schalter
   ● Mechanisch indirekt betätigter Schalter, z. B. Nockenschalter in mechanischer Zeitschaltuhr
   ● Elektromagnetisch fernbetätigter Schalter, z. B. Relais, Schütz
   ● Elektronischer Schalter, z. B. Halbeiterrelais
   ● Eine Kombination aus mehreren Einzelschaltern, um spezielle Anwendungsfälle zu ermöglichen, z. B. ein Relais für die tägliche Leistungsoptimierung und einen Kippschalter für den "Winterbetrieb".

Vorteilhaft für alle Schaltmittel-Varianten ist die vergleichsweise geringe Spannung, unter der die Schaltvorgänge ausgeführt werden. In jedem Fall sind die Anforderungen an die verwendeten Bauteile und die Belastung der Bauteile im Betrieb niedrig, verglichen mit herkömmlichen DC-Schaltern. Außerdem erleichtert das unterbrechungslose Schalten die optimale Regelung im Netzeinspeisegerät ("MPP-Tracking") .

Die Steuerung 40 eines Schaltmittels oder der Schaltvorrichtung 30 kann, wie bereits ausgeführt, zentral oder dezentral, mit Sensoren und/oder in Verbindung mit programmierbaren Steuergeräten erfolgen. Möglich sind z. B.
● Zeitliche Steuerung mit Zeitschaltuhren oder anderen programmierbaren Steuergeräten (z. B. Speicherprogrammierbare Steuerungen)
● Zentrale Helligkeits-abhängige Steuerung über Sensoren und Signalaufbereitung/-verknüpfung
● Dezentrale Helligkeits-abhängige Steuerung über Sensoren und Signalaufbereitung/-verknüpfung, die Stromversorgung kann dabei auch vom Solarmodul übernommen werden
● Manuelle Betätigung für spezielle Anwendungsfälle wie beispielsweise eine jahreszeitliche Ertragsoptimierung

Figur 3 zeigt ein konkretes Ausführungsbeispiel einer Schaltvorrichtung 30 zur definierten Abschaltung eines Solarmoduls 13, welches in den Strang 2 eingebettet ist. Die Schaltvorrichtung 30 umfasst hierbei ein Relais 35 als Schaltmittel. Es fungiert als elektromagnetisch betätigter Umschalter zwischen den Kontakten C und B, mit dem Wurzelkontakt A. In Fig. 3 ist der Zustand "Modul abgeschaltet" dargestellt, die Verbindung zum Solarmodul (Kontakt B) ist dabei unterbrochen.

Ferner ist zur unterbrechungsfreien Brückung eine Diode 37 eingezeichnet.

Ist das Schaltmittel als Einschalter ausgebildet, entfällt die in Fig. 3 gezeigte Verbindung zwischen den Punkten C und D. Ist das Schaltmittel als Umschalter ausgebildet, kann für den Zustand "Modul abgeschaltet" durch die Verbindung zwischen den Punkten C und D ein Spannungsabfall an der Diode 37 vermieden werden.

Die Diode 37 hat bei geöffnetem Einschalter-Kontakt A-B zwei Aufgaben: Erstens fließt der von den anderen Solarzellen erzeugte Strom in voller Höhe durch die Diode ("Bypass"), der Solar-Stromkreis bleibt geschlossen. Zweitens begrenzt sie die Spannung über dem Relaiskontakt auf maximal etwa die Leerlaufspannung des Moduls. Die Diode hat bei geöffnetem Umschalter-Kontakt A-B die gleichen zwei Aufgaben, bis die Umschaltzeit vorbei ist und der Umschalter-Kontakt A-C geschlossen ist. Danach übernimmt der geschlossene Kontakt A-C diese Aufgaben.

Die grundsätzliche Arbeitsweise der Schaltvorrichtung 30 kann folgendermaßen zusammengefasst werden: Im Zustand "abgeschaltet" (z. B. Schattenfall) ist die Verbindung von Kontakt A nach B getrennt und das Modul ist aus der Reihenschaltung aller Module herausgenommen. Der von den anderen Solarzellen und Modulen erzeugte Strom fließt entweder (Umschalter) durch die Verbindung A-C oder (Einschalter) durch die Diode von D nach E; der (Rest-)Strang bleibt betriebsbereit. Im Zustand "nicht abgeschaltet" (z. B. keine Verschattung) ist die Verbindung von A nach B geschlossen und das Modul ist mit den anderen Modulen in Reihe geschaltet. In dieser Situation liefert das Modul entsprechend den vollen Strom. Die vorgestellte Lösung funktioniert auch, wenn die Polarität von Modulen und Diode umgekehrt wird.

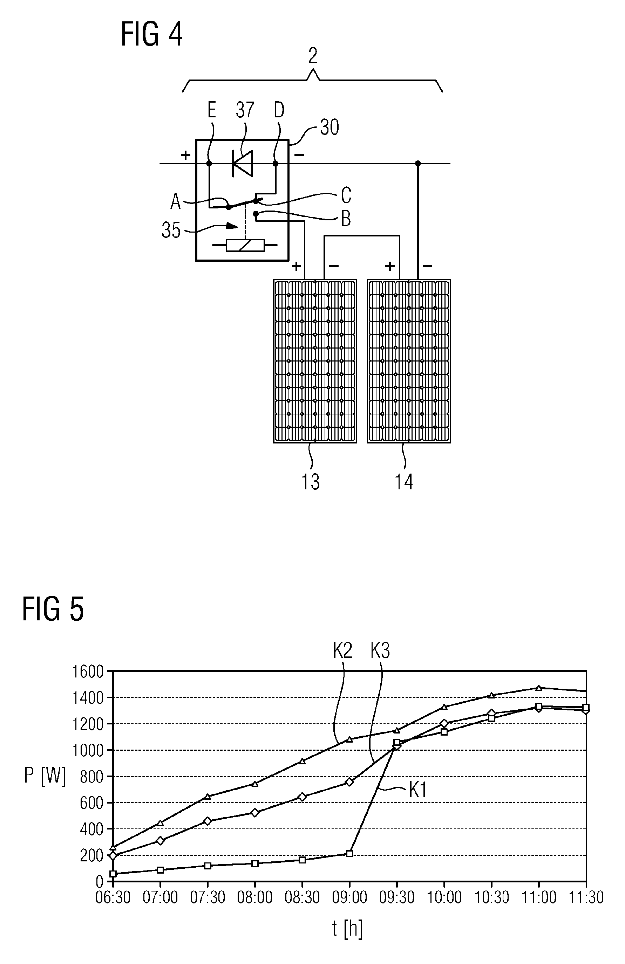

In Fig. 4 ist eine weitere Ausführungsvariante der Erfindung gezeigt, in welcher eine Schaltvorrichtung 30 gemäß Fig. 3 derart in einen Strang 2 eingefügt ist, dass zwei Solarmodule 13 und 14 definiert abgeschaltet werden können. Im Zustand "abgeschaltet" fließt der Strom je nach Ausgestaltung des Schaltmittels entweder (Umschalter) durch die Verbindung A-C oder (Einschalter) durch die Diode 37 von D nach E und wird somit an den beiden Solarmodulen 13 und 14 vorbeigelenkt. Der (Rest-)Strang bleibt betriebsbereit.

Die erfindungsgemäße Schaltvorrichtung 30, aufweisend ein Schaltmittel und ein Mittel zur Brückung, kann auch in Strängen eingesetzt werden, die aus mehreren jeweils aus parallelgeschalteten Modulen (oder anderen Solarzellen-Reihenschaltungen) gebildet werden, also bei einer sog. Netzstruktur. Ferner trägt die vorgestellte Lösung auch mit zweipoligem Schalter, jeweils ein Pol für die Plus- und die Minusleitung des abzuschaltenden Solarmoduls. Damit kann das Modul komplett galvanisch vom Strang getrennt werden. (Gilt in gleicher Weise für mehrere Module oder andere Solarzellen-Reihenschaltungen an einer Abschaltvorrichtung.) Sinnvoll ist die Ergänzung der Abschaltvorrichtung um eine optische Betriebsanzeige. Das kann z. B. durch Anschluss einer Leuchtdiode mit Vorwiderstand (oder Konstantstromquelle) an den Punkten E und D erfolgen.

Neben einer kontinuierlichen Nutzung der steuerbaren Schaltvorrichtung zur Leistungsoptimierung kann diese auch zur jahreszeitlichen Optimierung der Stromausbeute benutzt werden. Tendenziell ist der Wirkungsgrad vieler Netzeinspeisegeräte umso besser, je höher die Strangspannung ist. Dabei sind allerdings die gerätespezifischen Grenzwerte in jedem Fall einzuhalten, was die Optimierung der Modulzahl pro Strang erschwert. Das Problem ist, dass mit sinkenden Temperaturen die Modulspannung steigt, z. B. bei Modulen MONO 185 der Firma Schott um 0,326 %/K. Optimiert man die Modulzahl für den Sommerbetrieb, kann das bei niedrigen Temperaturen zu einer

Überschreitung der zulässigen Strangspannung führen. Die Folge ist der Ausfall des Netzeinspeisegeräts, bestenfalls nur vorübergehend.

Durch Steuerung der Abschaltvorrichtung über Spannungs- und/oder Temperatursensoren kann hier die für jede Jahreszeit optimale und sichere Strangkonfiguration sichergestellt werden. Alternativ ist auch eine einfache Steuerung von Hand mit einem "Winterbetrieb-Schalter" möglich.

In Fig. 5 sind drei Messkurven gegenübergestellt, anhand der die Leistungsoptimierung, welche durch die Erfindung erzielt wird deutlich wird. Aufgetragen sind die Leistungsmesswerte einer Photovoltaikanlage von 3,5 kWp mit 2 Strängen über eine Zeitdauer von 5 Stunden. Kurve K1 zeigt die gemessene Leistung des gelieferten Gleichstroms für einen Strang der Anlage, welcher 9 Solarmodule aufweist, von denen 2 Module vor 9:30 Uhr teilverschattet waren. Es ist deutlich zu erkennen, dass die abgegebene Leistung des Strangs durch die Teilverschattung sehr gering ist, weil die Gesamtleistung der Reihenschaltung der Solarmodule durch dasjenige Modul begrenzt, das die schwächste Stromabgabe hat. Erst ab 9:30 Uhr steigt die Effizienz der Anlage mit wegfallender Verschattung sprunghaft an. Kurve K2 zeigt die gemessene Leistung des gelieferten Gleichstroms für den anderen Strang der Anlage, welcher 10 unverschattete Solarmodule aufweist. Gemäß der Tageszeit steigt hier die Leistungsabgabe kontinuierlich. Kurve K3 stellt eine simulierte Kurve für den Fall dar, bei dem ein Strang 9 Solarmodule aufweist, von denen 2 Module vor 9:30 Uhr teilverschattet waren (vgl. K1) Allerdings wurde bei dieser Kurve die Abschaltung von 2 Solarmodulen vor 9:30 Uhr berücksichtigt. Das Optimierungspotenzial liegt vor 9:30 Uhr zwischen K1 und K3 und beträgt fast 1 kWh. Der Tagesgesamtertrag des Messtages lag bei 18,7 kWh.

## Patentansprüche

1. Photovoltaikanlage (1) mit mindestens einer Reihenschaltung (2) von Solarzellen,
**dadurch gekennzeichnet,**
**dass** mindestens eine Gruppe von Solarzellen (11,12,13,14,15) ein Schaltmittel (35) aufweist, das derart ausgelegt ist, dass eine vorgegebene oder vorgebbare An- oder Abschaltung der Gruppe erfolgen kann, und
**dass** ferner zu jedem dieser Schaltmittel (35) mindestens ein Mittel zur Brückung (37) vorhanden ist, welches derart ausgelegt ist, dass während der Abschaltung der Gruppe eine Verbindung zwischen den in der Reihenschaltung verbleibenden Solarzellen besteht.

2. Photovoltaikanlage (1) nach Anspruch 1,
**dadurch gekennzeichnet,**
**dass** das Schaltmittel (35) steuerbar ist.

3. Photovoltaikanlage (1) nach Anspruch 2,
**dadurch gekennzeichnet,**
**dass** als steuerbares Schaltmittel ein mechanisch, elektromagnetisch oder elektronisch betätigter Schalter vorgesehen ist.

4. Photovoltaikanlage (1) nach Anspruch 1 bis 3,
**dadurch gekennzeichnet,**
**dass** als Mittel zur Brückung (37) ein Halbleiter-Bauelement vorgesehen ist, um bei Abschaltung eine unterbrechungsfreie Verbindung zwischen den in der Reihenschaltung verbleibenden Solarzellen zu gewährleisten.

5. Photovoltaikanlage (1) nach einem der vorhergehenden Ansprüche, **dadurch gekennzeichnet,**
**dass** eine zentrale Steuerung für mindestens eine Gruppe von Solarzellen (11,12,13,14,15) und deren Schaltmittel oder eine dezentrale Steuerung pro Solarzellengruppe (11,12,13,14,15) und Schaltmittel (35) vorgesehen ist.

6. Photovoltaikanlage nach einem der vorhergehenden Ansprüche, **dadurch gekennzeichnet,**
**dass** ferner zumindest ein Sensor vorgesehen ist, über welchen die Steuerung erfolgt.

7. Photovoltaikanlage nach einem der vorhergehenden Ansprüche, **dadurch gekennzeichnet,**
**dass** eine zeitliche Steuerung erfolgt.

8. Photovoltaikanlage nach einem der vorhergehenden Ansprüche, **dadurch gekennzeichnet,**
**dass** zumindest ein Schaltmittel (35) mit einer Steuerung verbunden sind, welche die elektrischen Betriebswerte von Solarzellen in verschiedenen Teilen der Reihenschaltung auswertet und in Abhängigkeit der Auswerteergebnisse in Hinblick auf eine Leistungsoptimierung das mindestens ein Schaltmittel (35) steuert.

9. Photovoltaikanlage nach einem der vorhergehenden Ansprüche, **dadurch gekennzeichnet,**
**dass** die Schaltmittel über einen Bus mit einer Steuerung verbunden sind.

10. Steuereinrichtung (40) für eine Photovoltaikanlage mit mindestens einer Reihenschaltung von Solarzellen gemäß einem der Ansprüche 2 bis 9.

11. Schaltvorrichtung (30) für eine Gruppe von Solarzellen einer Photovoltaikanlage mit mindestens einer Reihenschaltung von Solarzellen, aufweisend ein steuerbares Schaltmittel (35), das derart ausgelegt ist, dass eine vorgegebene oder vorgebbare An- oder Abschaltung der Gruppe erfolgen kann, und
dass ferner zu jedem dieser Schaltmittel (35) mindestens ein Mittel zur Brückung (37) vorhanden ist, welches derart ausgelegt ist, dass während der Abschaltung der Gruppe eine Verbindung zwischen den in der Reihenschaltung verbleibenden Solarzellen besteht.
